# EUROPEAN PATENT APPLICATION

(11) **EP 3 971 461 A1**
(43) Date of publication of application: **23.03.2022**
(21) Application number: 21196894.6
(22) Date of filing: 15.09.2021
(51) Int. Cl.: F16L 27/08, F16L 39/00, F16L 39/04, F16L 41/00, F16L 23/028, F16L 23/032, F16L 23/036

(54) **A CONNECTION APPARATUS**

(30) Priority: 16.09.2020 IT 202000021823
(71) Applicant: Ecoterm S.N.C. di Faccioni Gilberto e Faccioni Stefano, 35044 Montagnana (PD) (IT)
(72) Inventor: FACCIONI, Stefano, 35044 Montagnana (PD) (IT)
(74) Representative: Braidotti, Andrea

(57) **Abstract**

Apparatus (1) for mechanical and hydraulic connection between two elements (2, 3), in particular to allow the passage of a liquid between a first element (2) and a second element (3), characterized in that it comprises:
- a first element (2) comprising a first body (4) which is provided with at least one passage (6, 8) for the liquid towards said second element (3) and/or coming from said second element (3),
- a second element (3) comprising a second body (9) which is provided with at least one inlet passage (10) for the liquid coming from the first element (2) and/or at least one outlet passage (11) for the liquid towards said first element (2),
- said first element (2) comprises a first connection portion (20) with a protruding tubular portion (22), in which said at least one passage (6, 8) is formed and which engages, preferably tightly, with a tubular portion receiver (23), in which said at least one inlet (10) and/or outlet (11) passage is obtained and which is provided in a second connection portion (21) provided in said second element (3), to connect said passages so fluidly between them and allow the passage of the liquid between said two elements (2, 3),
and characterized in that:
- comprises at least a third element (30) which is fixed to said second connection portion (21) of the second element (3) which is provided with said receiving tubular section (23) and is positioned around the protruding tubular section (22) of said first element (2),
- said first element (2), said second element (3) and said at least one third element (30) are configured so that their mutual engagement allows rotation between said first element (2) and the assembly comprising said second element ( 3) and said at least a third element (30), while keeping said first element (2) and said assembly mutually united,
- comprises at least one mechanical pusher (33) which is mounted on at least one of said elements (2, 3, 30) of the apparatus (1) so as to snap into recesses (40) which are formed on at least another/distinct element (2, 3, 30) of the apparatus, to thus allow snap rotation between said first element (2) and the assembly comprising said second element (3) and said at least one third element (30),
and characterized by the fact that said at least one mechanical pusher (33) comprises a spring (42) and a protruding pin (43) in which said spring (43) acts on said protruding pin (43) so as to push it to snap into said recesses (40).

## Description

The present invention refers to an apparatus for mechanical and hydraulic connection between two elements and, in particular, an apparatus for mechanical connection between two elements to allow the passage of a liquid between said two elements. In particular, the connection apparatus is of the type which allows the rotatable rotation of one element with respect to the other.

Various connection apparatuses for hydraulic elements are known which, in order to allow the reciprocal rotational rotation of the elements themselves, require to loosen - at least partially - the connection area between said two elements.

However, this solution is not fully satisfactory as it requires intervention on the connection area in order to loosen the joint that holds the two elements together and, undesirably, this intervention can cause leaks in correspondence with the connection area. Conveniently, in order to prevent such leaks, the passage of the liquid entering the fitting should be interrupted every time it is necessary to change the angular position of one element with respect to the other, however this would cause an unwanted (and sometimes not feasible/possible) interruption of the passage of liquid between the two elements.

EP2251495 describes a connection between a water treatment device to a connecting element associated with a water transport duct. In order to sealingly connect the water treatment device to the connecting element, a connection is provided between a first flange provided on the element and a second flange provided on the water treatment device. During assembly, the connection element is first connected at the inlet and outlet with the piping of a domestic installation, and then the water treatment device is connected to the connection element by means of a central screw, which protrudes centrally through the water treatment device. The water treatment device has an inner tube which is arranged concentrically within an outer tube, so that the water to be treated can flow into the water treatment device through the inner tube and then escapes from the water treatment device through the annular space provided between the inner tube and the outer tube.

Due to the rotationally symmetrical design of the flanges, the water treatment device can be connected to the connection element in any angular position with respect to the connection element itself, thus allowing the water treatment device to be mounted in the desired position, e.g. vertically, regardless of the route of the domestic installation piping. In essence, this allows a particularly flexible installation of the water treatment device on the connecting element. However, there is a risk that the screw connection will loosen over time, causing leakage at the flanges. In addition, the screw connection can loosen even if, after assembly, the water treatment device is rotated relative to the connecting element by also rotating the connection screw. Furthermore, such a configuration cannot be pre-assembled, since the assembly must necessarily take place on site according to the flow direction of the pipeline to be installed, which translates into a greater risk of errors, a greater risk of contamination and greater expenditure of time. However, since the exact assembly of the water treatment device relative to the connecting element is decisive for the sealing effect of the flange connection, their precise and correct pre-assembly is particularly advantageous.

In this regard, EP3176484 discloses a system for connecting the water treatment device to the connecting element by means of a flange connection in which the flange of the water treatment device engages behind the flange of the connecting element so that to allow free rotation of the device with respect to the connecting element. Furthermore, in order to have a precise and reproducible angular position of the device with respect to the connecting element, the use of an annular and suitably shaped elastic element is provided, which is inserted in a special seat defined in the annular space obtained between the opposite flat surfaces of the two flanges. In particular, the annularly developed elastic element - which is mounted on the water treatment device - is provided with projections suitable for engaging in corresponding grooves formed on the flange of the connecting element, to allow the device to snap rotate with respect to the connecting element. This solution is particularly complicated since it requires the production of a dedicated and suitably shaped annular elastic element. Furthermore, this solution is not optimal since said elastic element wears over time, thus eliminating the snap effect during the rotation of the device with respect to the connecting element.

The object of the invention is to propose an apparatus for mechanical and hydraulic connection between two elements which allows to overcome, at least in part, the drawbacks of the known solutions.

Another object of the invention is to propose an apparatus for mechanical and hydraulic connection between two elements which is alternative and/or improved with respect to known solutions.

Another object of the invention is to propose a connection apparatus which allows a high number of cycles of use.

Another object of the invention is to propose a connection apparatus that allows one element to rotate with respect to the other in a precise, reliable and repeatable way.

Another purpose of the invention is to propose a connection apparatus that can be supplied already pre-assembled/pre-assembled, so that at the time of installation it can at most modify, without requiring the use of any tools, the angular position of one element over the other.

Another object of the invention is to propose a connection apparatus which allows one element to maintain its angular position in a stable manner with respect to the other element.

Another object of the invention is to propose a connection apparatus of compact dimensions.

Another object of the invention is to propose a connection apparatus which ensures a watertight seal of the liquids passing through it.

Another object of the invention is to propose a connection apparatus which is completely interchangeable with those already present on the market.

Another object of the invention is to propose a connection apparatus which has an alternative and/or improved characterization, both in constructive and functional terms, with respect to the traditional ones.

Another object of the invention is to propose a connection apparatus of simple construction and achievable with low industrial costs.

Another object of the invention is to provide a connection apparatus that can be mass-produced and quickly and efficiently.

Another object of the invention is to propose a connection apparatus which allows a pipe to be mechanically and hydraulically connected to a water treatment device.

Another object of the invention is to realize a connection apparatus which has high standards, both constructive and functional, and at the same time affordable, thus allowing the possibility of its widespread diffusion.

Another object of the invention is to propose a connection apparatus which allows to modify the angular position of one element with respect to the other without requiring any tools, such as screwdrivers or Allen screws.

All these purposes, either individually or in any combination thereof, and others that will result from the following description, are achieved, according to the invention, with an apparatus with the characteristics indicated in claim 1.

The present invention is further clarified hereinafter in some of its preferred embodiments reported for purely illustrative and non-limiting purposes with reference to the attached drawing tables, in which:

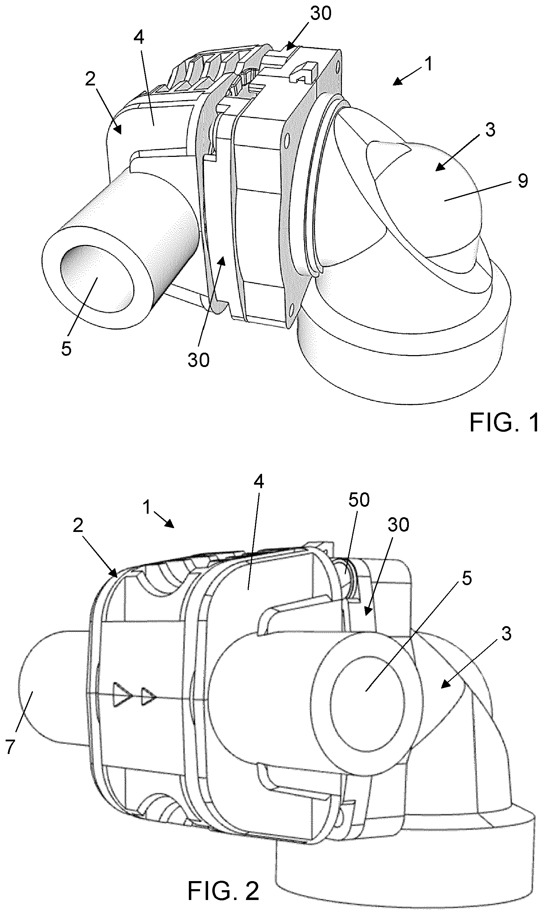

- Figure 1: shows a perspective view of the connection apparatus according to the invention,
- Figure 2: shows it in a different perspective view,

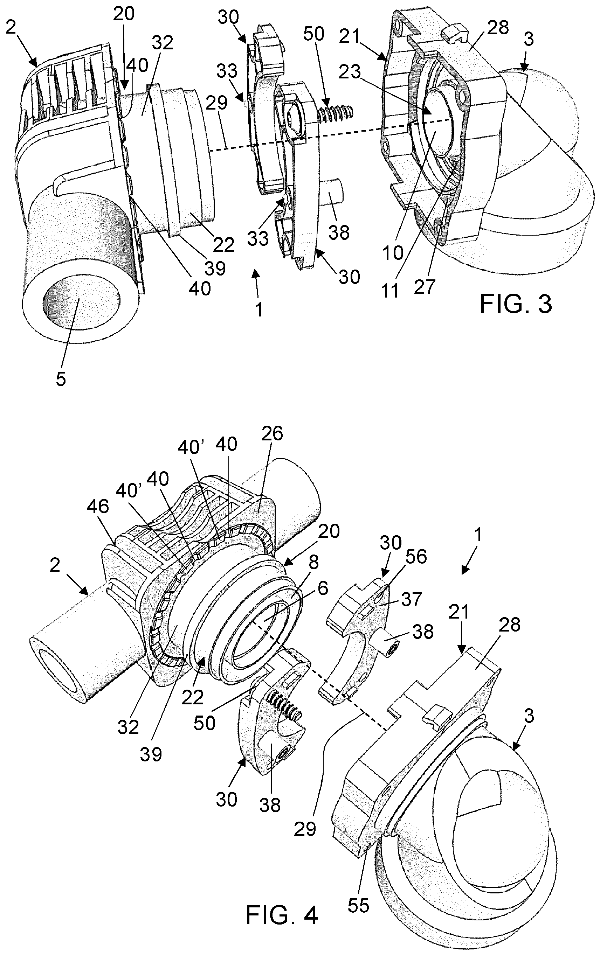

- Figure 3: shows it exploded in a first perspective view,
- Figure 4: shows it exploded in a different perspective view,
- Figure 5: shows in front view the connection portion of the first element of said apparatus,
- Figure 6: shows in front view the connection portion of the second element of the apparatus according to the invention,

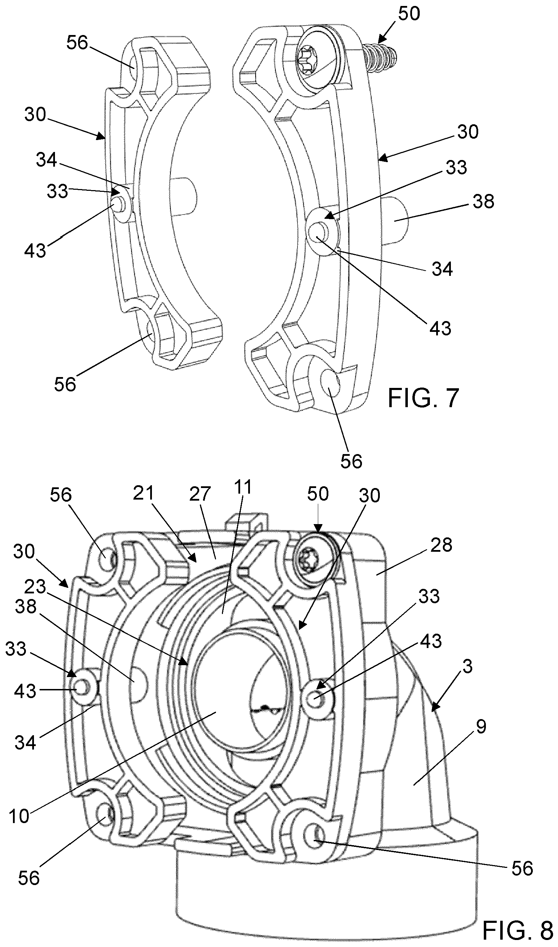

- Figure 7: shows in a perspective view two further members, in particular jaw members, of the apparatus according to the invention,
- Figure 8: shows the members of fig. 7 fixed to the second element of fig. 6,
- Figure 9: shows the apparatus according to the invention sectioned according to a cutting plane that crosses the three elements,
- Figure 10: shows a perspective view of the apparatus according to the invention in one condition (to be used during the assembly of the two elements) different from that of fig. 1, ie in a condition in which an element is rotated so as to assume a different angular position with respect to the other element, to thus allow easy access to the fixing screws,
- Figure 11: shows a perspective view of a mechanical pusher which is mounted on each of the members of fig. 7,
- Figure 12: shows the mechanical pusher of fig. 11 sectioned with a cutting plane passing through its longitudinal development axis,
- Figure 13: shows a perspective view of a different embodiment of the apparatus according to the invention, in particular with a different configuration of the second element.

As is clear from the figures, the connection apparatus according to the invention, indicated as a whole with the number 1, is configured to mechanically connect two elements together, and in particular a first element 2 with a second element 3, so that a liquid that passes through said elements passes from the first element 2 to the second element 3 and/or vice versa.

Conveniently, each of said two elements 2, 3 connected by means of the connection apparatus 1 is internally provided with at least one channel for passing and crossing a liquid.

In particular, the first element 2 comprises a first body 4 which is provided, internally, with at least one passage 6 and/or 8 for the liquid towards said second element 3 and/or coming from said second element. Conveniently, in a possible embodiment, said first body 4 is also provided, internally, with at least one corresponding liquid inlet 5 and/or outlet 7.

Preferably, said first element 2 comprises a first liquid inlet 5 which is fluidically connected to a first passage 6 and which is also provided with a first liquid outlet 7 which is fluidically connected with a second passage 8. Conveniently, the fluid circuit - defined inside the first element 2 - which connects the inlet 5 with the first passage 6 is fluidically separated from the fluidic circuit - also defined inside the first element 2 - which connects the outlet 7 with the second passage 8.

Advantageously, as shown in the figures, in the first element 2, the input 5 and the output 7 may be formed in diametrically opposite and aligned position, but may be arranged so as to be misaligned or angled (particularly with any angle less than 180°, for example 90°).

Advantageously, the first passage 6 and the second passage 8 are concentric with each other and, in particular, the first passage 6 can be defined by the internal circular passage section while the second passage 8 can be defined by an external annular passage section, or the other way around.

The second element 3 comprises a second body 9 which is provided, internally, with at least one inlet passage 10 for the liquid coming from said first element 2 and/or outlet 11 for the liquid towards said first element 2. Conveniently, in a possible embodiment, said second body 9 is also provided, internally, with at least one corresponding inlet and/or outlet for the liquid.

Advantageously, in a possible embodiment, the second element 3 comprises an inlet passage 10 and also an outlet passage 11 for the liquid and, suitably, inside the second body 9, said two passages are fluidically distinct and separated between them. Advantageously, the inlet passage 10 and the outlet passage 11 are concentric with each other and, in particular, the inlet passage 10 can be defined by the internal circular passage section while the outlet passage 11 can be defined by an external ring passage section, or vice versa.

Conveniently, the liquid can flow from the first element 2 towards the second element 3 and/or it can flow from the second element 3 towards the first element 2.

Conveniently, said second body 9 can be shaped like an elbow and/or can be straight. Conveniently, in a preferred embodiment, said second body 9 can be fluidly connected to a device (not shown) for treating a liquid, preferably water, such as a filtration device, to a softening device, a phosphate metering device. Conveniently, the second element 3 can be integrated in and/or associated with said device for treating a liquid, in particular water.

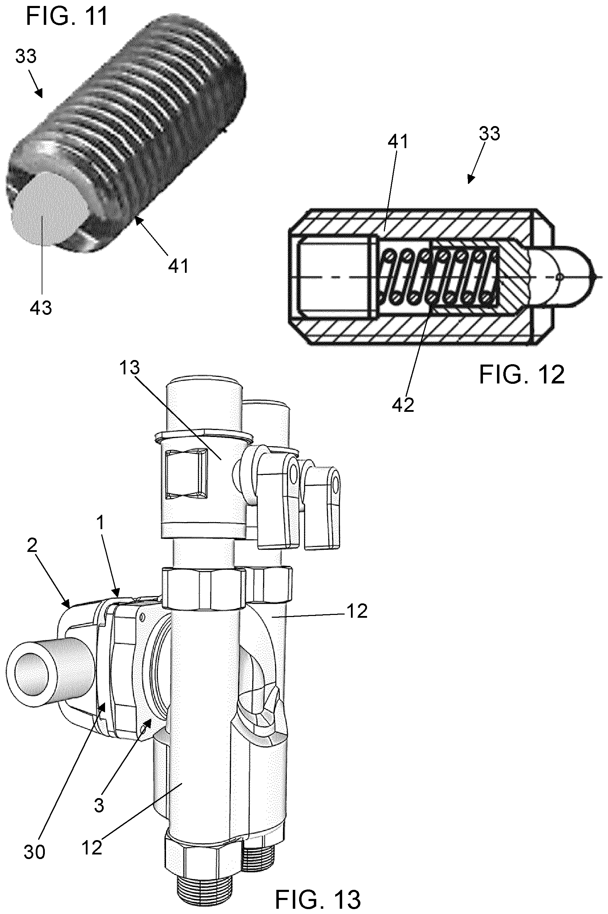

Conveniently, in a possible embodiment (see fig. 13), said second body 9 can be fluidically connected to at least one duct 12 on which a pump (for example a metering pump) or a flow regulation device of a liquid (in particular a valve 13, for example a bypass valve) can be mounted.

Preferably, the first passage 6 of the first element 2 is fluidically connected with the inlet passage 10 provided in the second element 3, to thus allow the flow of the liquid (which enters the first element through the inlet 5) from the first element 2 towards the second element 3. Preferably, moreover, the second passage 8 of the first element 2 is fluidly connected with the outlet passage 11 provided in the second element 3, to thus allow the flow of the liquid from the second element 3 towards/within the first element 2, and in particular towards the outlet 7 of the first element.

The first element 2 comprises a first connection portion 20 and, conveniently, said at least one passage 6 and/or 8 is formed in this first connection portion. Conveniently, in a corresponding manner, the second element 3 comprises a second connection portion 21 and, conveniently, said at least one inlet 9 and/or outlet 11 is formed in this second connection portion.

Conveniently, the apparatus 1 is configured so that the first connection portion 20 of the first element 2 faces the second connecting portion 21 of the second element 3.

Conveniently, the first connecting portion 20 comprises a protruding tubular portion 22 which mechanically engages with a receiving tubular portion 23 of said second connecting portion 21. In particular, the first passage 5 and/or the second passage 8 of the first element 2 are defined inside said protruding tubular section 22, while the inlet passage 10 and/or the outlet passage 11 of the second element 3 are defined inside said receiving tubular section 23.

Conveniently, the protruding tubular section 22 engages tightly with the receiving tubular section 23, for example the protruding tubular section 22 fits/inserts at least partially within the receiving tubular section 23, or vice versa. Preferably, the seal is obtained by means of suitable gaskets, for example O-rings (not shown), fitted around the protruding tubular section 22 and elastically compressed by the internal walls of the receiving tubular section 23.

Advantageously, in a possible embodiment such as the one illustrated in the figures, the protruding tubular portion 22 comprises an internal tubular wall and an external tubular wall, concentric to each other, which respectively delimit the first passage 6 and the second passage 8 (or vice versa). Correspondingly, the receiving tubular section 23 comprises an internal receiving tubular wall and an external receiving tubular wall, concentric to each other, which respectively define the inlet passage 10 and the outlet passage 11 (or vice versa). Conveniently, the inner tubular wall of the first element 2 hermetically engages (preferably through the use of an O-ring type gasket) with the internal receiving tubular wall of the second element 3, while the external tubular wall of the first element 2 is hermetically engaged (preferably through the use of an O-ring type gasket) with the external receiving tubular wall of the second element 3.

It is also understood that, in a possible alternative embodiment (not shown here), the tubular section projecting 22 can be provided in the second connection portion 21 of the second element 3 and that the corresponding receiving portion 23 is formed in the first connection portion 20 of the first element 2.

Conveniently, the first connection portion 20 also comprises a first wall 26 positioned around the protruding tubular portion 22 and from which said protruding tubular portion 22 substantially orthogonally protrudes. Preferably, the first wall 26 has a flat or substantially flat development.

The apparatus 1 according to the invention also comprises a series of recesses 40 arranged along a circular ring path 46 or in any case a circular ring sector.

Preferably, in a possible embodiment such as that illustrated in the figures, the recesses 40 are formed on said first wall 26 and are arranged so as to define said circular crown 46 around the protruding tubular portion 22. Conveniently, the recesses 40 are radially aligned with respect to said circular ring path 46 and with respect to the section of the protruding tubular section 22. Advantageously, therefore, in a possible embodiment such as that illustrated in the figures, the recesses 40 are obtained directly on the first body 4 of the first element 2 and, in particular, on the first connection portion 20.

Conveniently, the recesses 40 can be defined by depressed grooves with respect to the first wall 26 or they can be defined between ribs 40' projecting with respect to said first wall 26.

Advantageously, the second connection portion 21 comprises likewise a second wall 27 positioned around the tubular receiving section 23. In particular, the receiving tubular section 23 is obtained and/or develops substantially orthogonally with respect to said second wall 27. Advantageously, the second connection portion 21 also comprises a protruding frame 28 which externally delimits the second wall 27 and which, preferably, it is defined by a wall bent with respect to said second wall 27.

The apparatus 1 also comprises at least a third element 30 which is positioned between the first element 2 and the second element 3, in particular in correspondence with the respective connection portions 20 and 21 of said two elements 2 and 3. More in detail, said at least a third element 30 is fixed to said second connection portion 22 of the second element 3 which is provided with said receiving tubular section 23 and is positioned around the protruding tubular section 22 of said first element 2. Advantageously, said at least one third element 30 is configured to cooperate with the connecting portions 20 and 21 of the two elements 2, 3 to thus keep said two elements 2 and 3 joined together, while allowing the rotatable rotation between the first element 2, which is provided with the protruding tubular section 22, and the assembly formed by said at least one third element 30 and the second element 3 which is provided with the receiving tubular section 23. In particular, said at least one third element 30 is configured to engage the connecting portions 20 and 21 of the two elements 2 and 3 so as to maintain the axial mechanical constraint deriving from the engagement of the protruding tubular section 22 with the receiving tubular section 23, preferably to prevent the translation movement between the two elements along the direction corresponding to and/or parallel to the rotation axis 29 around which the rotation between said first element 2 and the assembly comprising said second element 3 and said at least one third element 30 takes place. Conveniently, the direction defined by The axis 29 also corresponds to the longitudinal development direction of the protruding tubular section 22.

Conveniently, each third element 30 is mechanically fixed, for example by means of screws 50 or other traditional mechanical fastening members, to a connection portion of the element provided with the section receiving tubular 23 so as to be integral in rotation with said element, and faces the alt ra connection portion of the element provided with the protruding tubular portion 22. In particular, in the embodiment illustrated in the figures, each third element 30 is mechanically fixed to the second connection portion 21 provided with the receiving tubular portion 23, while it faces the first connection portion 20 provided with the protruding tubular portion 22.

Conveniently, each third element 30 is positioned around and externally to the protruding tubular portion 22. Advantageously, each third element 30 and the protruding tubular portion 22 are configured in such a way as to prevent the translation of a element moving away from each other along the axis of rotation 29, thus keeping them mutually constrained to each other along said direction. Conveniently, each a third element 30, which is integral with/fixed to the second element 3, and said protruding tubular portion 22, which is integrated in the first element 1 (or vice versa), are configured in such a way as to mutually cooperate to prevent moving away. between said first element 2 and said assembly along the axis of rotation 29. Conveniently, in a possible embodiment not shown here, each third element 30, which is integral with/fixed to the second element 3, can be provided with means which can they engage by interlocking with corresponding countermeans provided on the tubular section 22, to thus prevent the moving away between said first element 2 and said assembly along the rotation axis 29.

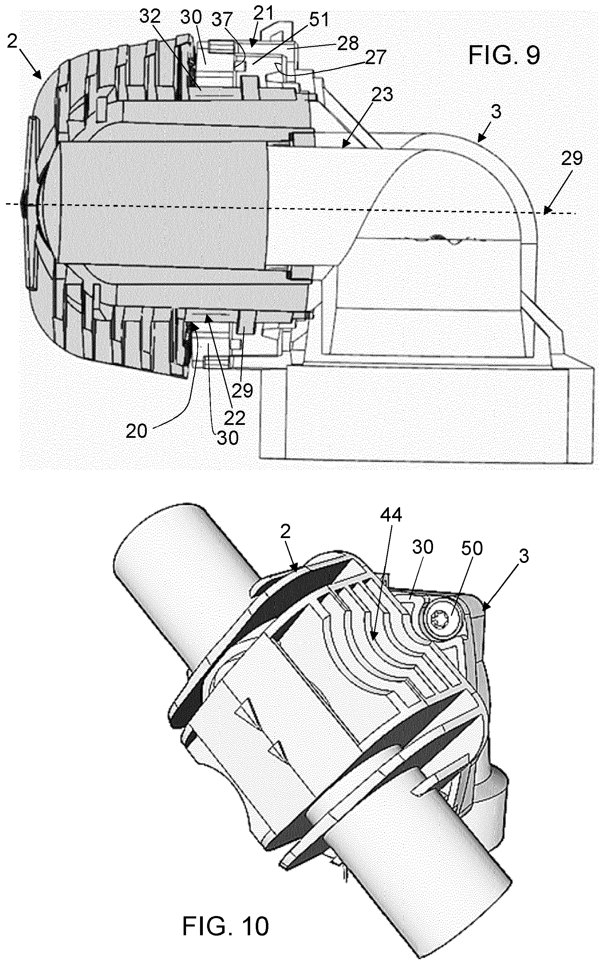

Advantageously, for this purpose, at least one protruding tubular section 22 is provided for rib 39 - preferably with continuous circumferential development - which, in the assembled configuration of the apparatus 1, is positioned and locked axially and between the third elements 30 and the second connecting portion 21 of the second element 2 (cf. fig. 9).

Advantageously, said third element 30 comprises at least one spacer 38 in correspondence with its face 37 facing the element 3 to which it is intended to be fixed so as to be integral in rotation. In particular, the spacer 38 is provided in correspondence with the face 37 of the third element facing the second connection portion 21 of the second element 2. Conveniently, when the third element 30 is fixed to the second element 2 by means of screws 50 or other fastening members, the spacer 38 keeps the face 37 of said third element 30 spaced apart from the second wall 27, thus advantageously defining a cavity 51 within which is contained - preferably clamped - the rib 39 of the protruding tubular section 22 of the first element 2.

Advantageously, said at least one third element 30 is configured to externally wind, at least partially, and preferably clamp, the protruding tubular section 22.

In a possible and preferred embodiment, such as the one illustrated in the figures, two third elements 31 are provided, which are symmetrical to each other, configured to wrap sideways - at least in part - the protruding tubular section 22. Preferably, each element 31 can act substantially as a lateral jaw and, suitably, comprises an internal surface configured (ie shaped and configured) to follow and come into contact, at least partially, with the curved tubular profile of a part 32 of the external protruding tubular section 22. Preferably, two third elements 31 are provided which laterally wrap the protruding tubular portion 22 from two diametrically opposite positions. Preferably, said at least a third element 30 can be configured to substantially completely envelop the protruding tubular section 22.

The apparatus 1 also comprises at least one mechanical pusher 33 which is mounted on at least one of said elements 2, 3 or 30 of the apparatus 1 and which comprises a spring 42 and a protruding tip 43, and in which said spring 43 acts on said protruding tip 43 so as to push it to snap into said recesses 40. Conveniently, the spring 42 is made/defined in a separate piece with respect to said protruding tip 43. Preferably, the spring 42 can be made of a different material than the protruding tip 43, in particular the spring 42 can be made of metallic material, while the protruding tip 43 can be made of metallic (which can be the same or different than that of the spring) or polymeric material.

Advantageously, the mechanical pusher 33 can be of the spring presser type. Conveniently, the tip 43 of the mechanical pusher 33 is elastically protruding and is arranged in such a way as to snap into the recesses 40 which are made on another of said elements 2, 3 or 30 of the apparatus, to thus allow the rotatable rotation to snap between the first element 2 provided with the protruding tubular section 22 and the assembly formed by the second element 3 and the third element(s) 30.

Conveniently, the mechanical pusher 33 is provided and/or mounted on an element of the apparatus which is different/distinct from that in which the recesses 40 are provided/obtained. Conveniently, the mechanical pusher 33 can be provided and/or mounted on the first element 2, on the second element 3 and/or on said at least one third element 30, while the recesses 40 can be provided and/or obtained on the first element 2, on the second element 3 or on said at least one third element 30, provided that it is a different/distinct element from the one in which the pusher.

Conveniently, in a possible and preferred embodiment such as that illustrated in the figures, at least one mechanical pusher 33 is mounted on each third element 30, for example of the spring presser type, provided with a tip 43 which protrudes elastically and is arranged so as to snap into the recesses 40 which are positioned around said protruding tubular section 22, to thus allow the rotatable rotation (in particular around the rotation axis 29) by snap action between the first element 2 provided with the protruding tubular section 22 and the assembly formed by the second element 3 and by the third element(s) 30.

Preferably, the apparatus 1 comprises two (or more) third elements 30 and on each of these a mechanical pusher 33 is mounted, to example of spring pusher type. Conveniently, said two (or more) third elements 30 are configured to surround the protruding tubular section 22.

In particular, each a third element 30 is fixed to the second element 3 so as to be integral in rotation with the latter, while the first element 2 engages with each third element 30 and with the second element 3 so as to allow reciprocal rotation between said first element 2 and the assembly comprising said second element 3 and each third element 30, and also in such a way as to prevent the translation of said first element with respect to said assembly.

Furthermore, advantageously, the mechanical pusher 33 mounted on each third element 30 cooperates with the recesses 40 (and in particular the tip 43 of each pusher engages elastically with a snap into said recesses) arranged in a circular crown 46 around the protruding tubular section 22 and obtained in the first element 2, so that said first element 2 can be snapped with respect to the assembly comprising said second element 3 and each third element 30, or vice versa.

Conveniently, for this purpose, said third element 30 is arranged so that the tip 43 of each mechanical pusher 33 acts within corresponding recesses 40 formed in the first wall 26 that surrounds the protruding tubular section 22 of the first connection portion 20 of the first element 2.

In a possible and preferred embodiment, at least two mechanical pushers 33 are provided which, preferably, are mounted on the third elements 30 so as to act simultaneously on corresponding recesses 40 that are diametrically opposed to each other along the annulus 32.

preferably, as shown in the figures, two spring pressers 33 are provided, each of which is mounted on one of the two third elements 30.

In a possible preferred embodiment, such as the one shown in the figures, the mechanical pusher 33 is of the spring pusher type and comprises a sleeve body 41 inside which a spring 42 is inserted, which acts in compression on the tip spor people 43 (shaped like a pin or ball) so as to push it towards the outside of the body itself. Preferably, the sleeve body 41 is externally threaded and, suitably, the corresponding mechanical pusher 33 is fixed/mounted on the third element 30 by screwing it inside a corresponding containment seat 34, with tubular development, provided/obtained in said third element 30. Advantageously, therefore, the mechanical pusher 33 is pre-assembled before its insertion into the containment seat 34, thus allowing the use of already assembled and commercially available mechanical pushers 33. Preferably, the sleeve body 41 is externally of the self-tapping type, thus internally threading the containment seat 34 during its screwing inside the seat itself.

Conveniently, in a possible alternative embodiment not shown in the figures, the mechanical pusher 33 is of the spring presser type and consists only of the spring 42 and the protruding tip 43. In particular, in this case, the spring 42 is directly housed inside the containment seat 34 and acts in compression, on the protruding tip 43 (shaped like a pin or ball) so as to push it towards the outside of the containment seat 34. In substance, in this case, the sleeve body of the pusher 33 can be defined by the same containment seat 34 obtained in the corresponding element of the apparatus 1. Furthermore, in this case, the mechanical pusher 33 is conveniently assembled directly inside the containment seat 34.

Advantageously, in a possible embodiment, the containment seat 34 is obtained and/or extends at least in part so as to define the spacer 38.

Advantageously, by varying the shape of the tip of the mechanical pusher 33 and/or of the recesses 40 cooperating with each other, and/or by varying the elastic constant of the pusher spring, it is possible to appropriately set the sensitivity of the tactile perception (haptic) of the snap rotation of one element with respect to the other.

Advantageously, when the third element 30 is fixed to the second element 3, the face 37 of said third element 30 abuts with the edge of the protruding frame 28 of the second wall 27 of the second connection portion 21.

Conveniently, the first connection portion 20 and the second connection portion 21 are configured, both in terms of shape and size, so that following the rotation of one element with respect to the other, the access and activation area for the fastening members 50 of each third element 30 to one of the two elements (ie the second element 3) is uncovered, and in particular is not frontally covered by the other element (ie the first element). Preferably, for this purpose, the first connection portion 20, and in particular the first wall 26, has a substantially corresponding surface development (as illustrated in the figures) or lower than that of the second connection portion 21, and the detail of the second wall 27.

Conveniently, in each third element 30 there is at least one through hole 56 for a corresponding fixing member 50 which then engages in a corresponding seat 55 made in the second element 3, to thus fix each third element 30 to the second element 3. Even if only one fixing member 50 is shown in the figures, it is understood that a fixing member 50 is provided for each through hole 56 provided in the two third elements 30 and which engages in a corresponding seat 55 obtained in the second element 3.

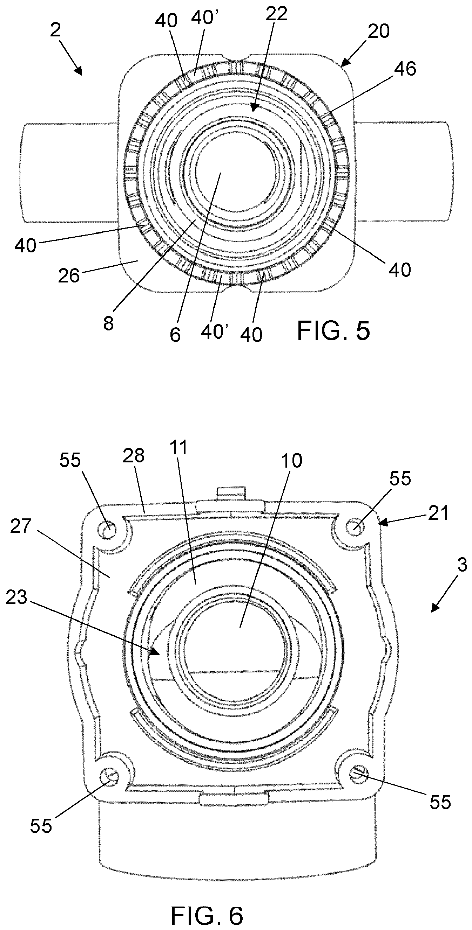

Suitably, as shown for example in fig. 6, the second connection portion 21 of the second element 3 - and in particular its protruding frame 28 - substantially defines/delimits a quadrilateral shape. The seats 55 of the second element 3 are substantially positioned at the vertices of said quadrilateral (see fig. 6) and, therefore, there can be four angular positions (rotated between them by 90°, see for example fig. 10) of the first element 2 with respect to the assembly formed by the third element(s) 30 fixed to the second element 3 in which the heads of the fastening members 50 can be easily screwed. Advantageously, as shown for example in fig. 10, the first body 4 of the first element 2 comprises recessed and/or shaped areas 44 to facilitate the movement of the tool when it engages the fastening screws of the third element(s) 30 to the second element 3.

Conveniently, in a possible alternative embodiment of the apparatus 1 not shown here, said at least one mechanical pusher 33 can be provided/mounted on the first element 2 provided with the protruding tubular section 22, while the recesses 40 can be made in said at least one third element 30 and/or in said second element 3 provided with the receiving tubular section 23.

Conveniently, in a possible alternative embodiment of the apparatus 1 not shown here, said at least one mechanical pusher 33 can be provided/mounted on the second element 3 provided with the receiving tubular section 23, while the recesses 40 can be obtained in the first element 2 provided with the protruding tubular section 22.

Conveniently, in a preferred embodiment such as that illustrated in the figures, said at least one mechanical pusher 33 develops and acts in a direction which is substantially parallel to the axis of rotation 29 around which the rotation of said first element 2 with respect to the assembly including said second element 3 and said at least a third element 30, or vice versa. Preferably, in a preferred embodiment such as the one illustrated in the figures, said at least one mechanical pusher 33 develops and acts parallel to the longitudinal development direction of the protruding tubular section 22.

Conveniently, in a possible alternative embodiment of the apparatus 1 here not shown, said at least one mechanical pusher 33 develops and acts radially with respect to the rotation axis 29, around which the rotation of said first element 2 takes place with respect to the assembly comprising said second element 3 and said at least a third element 30, or viceversa. Conveniently, in a possible alternative embodiment of the apparatus 1 not shown here, said at least one mechanical pusher 33 can act externally on the protruding tubular portion 22 in the radial direction. In this case, suitably, the recesses 40 for the snap engagement of the tip of said at least one mechanical pusher 33 can be obtained directly on the external surface of the same protruding tubular section 22.

Therefore, suitably, therefore, in the apparatus 1 the first element 2 and the assembly formed by the third element(s) 30 fixed to the second element 3 can be snapped relative to each other, and this thanks to the snap engagement of the protruding tip 40 of each mechanical pusher 33 within the recesses 40 preferably arranged in a circular crown 46 and obtained directly in the body of an element different from that in which at least one mechanical pusher 33 is provided/mounted. Preferably, the first element 2 can be rotated with respect to said assembly.

Conveniently, moreover, in the apparatus 1 the first element 2 and the assembly formed by the third element(s) 30 fixed to the second element 3 are kept joined together along the rotation axis 29 which also corresponds to the direction for inserting the protruding tubular section 22 into the receiving tubular section 23, and this is obtained by engaging/capturing the rib 39 of the protruding tubular section 22 of the first element 2 between the third element(s) 30 and the second element 3.

Advantageously, the first element 2, the second element 3 and said at least a third element 30 are made by injection molding of plastic material, preferably of polymeric material, such as for example polyamide, possibly reinforced with glass fibers or other materials. Alternatively, one or more of the elements of the apparatus 1 could be made by 3D printing or other additive manufacturing methods.
The assembly of the apparatus 1 according to the invention is particularly quick and fast. In particular, first each third element 30 is positioned (alone or pre-screwed - but not completely - to the second element 3) around the protruding tubular portion 22 of the first element 2.

Conveniently, the first element 2 is rotated/positioned with respect to the third element(s) 30 (for example bringing it to the condition illustrated in fig. 10) so that a tool, for example a screwdriver or an Allen key, can access and also act in correspondence with the head of the fastening members 50 of the third element(s) 30 to the second element 3, to effect or thus complete the tightening of the members and thus make the third element(s) stably integral with each other 30 and with the second element 3. Preferably, every 45° of rotation with respect to the first element 2 with respect to the assembly of the second element 3 with the third element/s 30, the heads of the fastening members 50 are uncovered (ie not frontally covered by said first element 2), thus allowing to easily access and screw said members.

From what has been said it is clear that the apparatus according to the invention is more advantageous than the traditional ones, and in particular:
- the interaction between the pusher and the recesses arranged in a circular crown defines a snap rotation that is easily perceptible at the haptic level by the user/installer and this allows to define a plurality of angular positions between the two elements to be connected which are easily identifiable and repeatable,
- the presence of at least two pushers acting on two diametrically opposite grooves, allows the angular position to be stably maintained between the two elements, thus avoiding reciprocal rotations between the latter due to accidental and involuntary i nterventi ons/contacts,
- to obtain the snap rotation it does not require any dedicated annular elastic element which, over time, could wear out,
- can be supplied pre-assembled and assembled,
- once assembled/assembled, the rotation between the two elements can be carried out without having to use any tools,
- is of particularly compact construction, and
- it can be achieved with reduced industrial costs.

In particular, unlike EP3176484, the apparatus according to the invention provides for the use of a mechanical pusher which comprises a spring and a protruding tip in which the spring acts on said protruding tip so as to push it to snap into said recesses, thus avoiding the use of a dedicated annular elastic element which, over time, could wear out. Moreover, in this way, it is possible, according to the needs or requests, to modify the intensity of the perceived haptic perception, simply by mounting a mechanical pusher, and in particular a spring, with a different elastic constant.

The present invention has been illustrated and described in two of its preferred embodiments, but it is understood that executive variations may apply thereto in practice, without however departing from the scope of protection of the present patent for industrial invention.

## Claims

1. Apparatus (1) for mechanical and hydraulic connection between two elements (2, 3), in particular to allow the passage of a liquid between a first element (2) and a second element (3), **characterized in that** it comprises:
- a first element (2) comprising a first body (4) which is provided with at least one passage (6, 8) for the liquid towards said second element (3) and/or coming from said second element (3),
- a second element (3) comprising a second body (9) which is provided with at least one inlet passage (10) for the liquid coming from the first element (2) and/or at least one outlet passage (11) for the liquid towards said first element (2),
- said first element (2) comprises a first connection portion (20) with a protruding tubular portion (22), in which said at least one passage (6, 8) is formed and which engages, preferably tightly, with a tubular portion receiver (23), in which said at least one inlet (10) and/or outlet (11) passage is obtained and which is provided in a second connection portion (21) provided in said second element (3), to connect said passages so fluidly between them and allow the passage of the liquid between said two elements (2, 3),
and **characterized in that**:
- comprises at least a third element (30) which is fixed to said second connection portion (21) of the second element (3) which is provided with said receiving tubular section (23) and is positioned around the protruding tubular section (22) of said first element (2),
- said first element (2), said second element (3) and said at least one third element (30) are configured so that their mutual engagement allows rotation between said first element (2) and the assembly comprising said second element (3) and said at least a third element (30), while keeping said first element (2) and said assembly mutually united,
- comprises at least one mechanical pusher (33) which is mounted on at least one of said elements (2, 3, 30) of the apparatus (1) so as to snap into recesses (40) which are formed on at least another/distinct element (2, 3, 30) of the apparatus, to thus allow snap rotation between said first element (2) and the assembly comprising said second element (3) and said at least one third element (30),
and **characterized by** the fact that said at least one mechanical pusher (33) comprises a spring (42) and a protruding pin (43) in which said spring (43) acts on said protruding pin (43) so as to push it to snap into said recesses (40).

2. Apparatus according to claim 1, **characterized in that** said at least one mechanical pusher (33) acts in a direction which is substantially parallel to the axis (29) around which the rotation between said first element (2) and the assembly comprising said second element (3) and said at least one third element (30).

3. Apparatus according to one or more of the preceding claims, **characterized in that** said at least one third element (30) is positioned the first connection portion (20) of the first element (2) and the second connection portion (21) of the second element (3) and is configured to engage the first (20) and/or the second connection portion (21) so as to maintain the axial mechanical constraint deriving from the engagement between the protruding tubular portion (22) and the receiving tubular portion (23).

4. Apparatus according to one or more of the preceding claims, **characterized in that** at least one mechanical pusher (33) is mounted on said at least one third element (30) provided with said tip (43) which protrudes elastically and is configured to snap into recesses (40) formed around and/or on said protruding tubular section (22), to thus allow snap rotation between said first element (2) and the assembly comprising said second element (3) and said at least one third element (30).

5. Apparatus according to one or more of the preceding claims, **characterized in that** on said second element (3) is mounted at least one mechanical pusher (33) provided with said tip (43) which protrudes elastically and is configured to snap into recesses (40) formed around and/or on said protruding tubular section (22), to thus allow snap rotation between said first element (2) and the assembly comprising said second element (3) and said at least one third element (30).

6. Apparatus according to one or more of the preceding claims, **characterized in that** said first connection portion (20) comprises a plurality of recesses (40) which are formed on a first wall (26) positioned around the protruding tubular portion (22) and from which said protruding tubular section (22) substantially orthogonally protrudes, said recesses (40) being arranged in a circular crown (46), or in a sector of circular crown (46), around said protruding tubular section (22).

7. Apparatus according to one or more of the preceding claims, **characterized in that** each third element (30), which is fixed to said second element (3), is configured to wrap laterally and externally, at least partially, said protruding tubular section (22) and is configured to cooperate with said protruding tubular portion (22) of the first element (2) so as to allow rotation between said first element (2) and the assembly comprising said second element (3) and said at least one third element (30), while preventing movement away from said first element (2) and said assembly along the longitudinal direction (29) of the protruding tubular portion (22).

8. Apparatus according to one or more of the preceding claims, **characterized in that**:
- in said protruding tubular portion (22) of the first connection portion (20) of the first element (2) a first passage (5) and a second passage (8) are made concentric to each other,
- in said tubular receiving section (23) of the second connection portion (21) of the second element (3) there are an inlet passage (10) and an outlet passage (11) concentric with each other,
and by the fact that, following of the engagement of said protruding tubular portion (22) with said receiving tubular portion (23), said first passage (5) is in fluidic communication with said inlet passage (10) while said second passage (8) is in fluidic communication with said outlet passage (11), or vice versa.

9. Apparatus according to one or more of the preceding claims, **characterized in that** it comprises two third elements (30) which laterally wrap the protruding tubular portion (22) of the first element (2) from two diametrically opposite positions and by the fact that on each of the third elements (30) is mounted at least one mechanical pusher (33), said mechanical pushers (33) being mounted on the respective third elements (30) so as to act simultaneously on respective recesses (40) which are diametrically opposite each other along the circular crown (46).

10. Apparatus according to one or more of the preceding claims, **characterized in that** each third element (30) is fixed to the second element (2) by means of fastening members (50) and comprises a spacer (38) which maintains the face (37) of said third element (30) spaced apart from the second wall (27) provided around the receiving tubular section (23), thus defining a cavity (51) within which a rib (39) obtained externally on the section is housed, preferably blocked protruding tubular (22) of the first element (2).

11. Apparatus according to one or more of the preceding claims, **characterized in that** the first connection portion (20) and the second connection portion (21) are configured so that following the rotation of the first element (2) with respect to said assembly, the area of access and activation for fastening members (50) of each third element (30) to the second element (3) is uncovered, and in particular is not frontally covered by the first element (2).

12. Apparatus according to one or more of the preceding claims, **characterized in that** said mechanical pusher (33) comprises a sleeve body (41) inside which said spring (42), which acts in compression, on said protruding tip (43) so as to push it towards the outside of the body itself, said sleeve body (41) being externally threaded and screwed into a corresponding containment seat (34) obtained in said element (2, 3, 30) on which said mechanical pusher (33) is mounted.

13. Apparatus according to one or more of the preceding claims, **characterized in that** said element (2, 3, 30) on which said mechanical pusher (33) is mounted comprises a containment seat (34) in which said spring is directly housed (42) which acts in compression on said protruding tip (43) so as to push it towards the outside of the containment seat (34).

14. Apparatus according to one or more of the preceding claims, **characterized in that** said first element (2) and/or said second element (3) is associated with and/or integrated:
- a device for the treatment of the liquid passing through said elements (2, 3), or
- at least one duct (12) connected to a pump and/or to a device for regulating the flow of the liquid that passes through said elements (2, 3).

15. Apparatus according to one or more of the preceding claims, **characterized in that** said at least one mechanical pusher (33) develops and acts radially with respect to the axis (29) around which the rotation between said first element (2) and the the assembly comprising said second element (3) and said at least one third element (30).
